# EUROPÄISCHE PATENTSCHRIFT

(11) **EP 3 868 513 B1**
(45) Veröffentlichungstag und Bekanntmachung des Hinweises auf die Patenterteilung: **28.08.2024**
(21) Anmeldenummer: 21157542.8
(22) Anmeldetag: 17.02.2021
(51) Int. Cl.: B23Q 16/02, B23Q 17/00

(54) **DREHTISCHSYSTEM**
TURNTABLE SYSTEM
SYSTÈME DE TABLE ROTATIVE

(30) Priorität: 18.02.2020 DE 102020104218
(43) Veröffentlichungstag der Anmeldung: 25.08.2021
(73) Patentinhaber: TAKTOMAT kurvengesteuerte Antriebssysteme GmbH, 86554 Pöttmes (DE)
(72) Erfinder: Hofstetter, Norbert, 86676 Hollenbach (DE); Zeilnhofer, Robert Josef, 86165 Augsburg (DE)
(74) Vertreter: Glück Kritzenberger Patentanwälte PartGmbB

(56) Entgegenhaltungen:
- EP-A1- 1 754 566
- EP-A1- 2 002 928
- EP-A1- 2 093 642
- EP-A2- 3 560 653
- DE-A1- 102010 018 003
- DE-U1- 202010 016 682

## Beschreibung

Die Erfindung bezieht sich auf ein Drehtischsystem zur Aufnahme von wenigstens einer Bearbeitungs- und Handlingseinheit.

Derartige Drehvorrichtungen, die dem Fachmann auch als Drehtische bekannt sind, werden üblicherweise für die Herstellung und/oder Bearbeitung und/oder Verarbeitung von Werkstücken verwendet. Insbesondere werden derartige Drehvorrichtungen auch als Rundtakttische für schrittweise Arbeitsfolgen und Fertigungsprozesse verwendet, wobei sich solcherart ausgebildete Drehvorrichtungen sowohl für den horizontalen Einsatz, als auch für den Vertikalbetrieb eignen.

Beispielsweise werden derartige Drehvorrichtungen als Rundtakttische in Fertigungsstraßen der Automobilindustrie verwendet, um auf Trägergestellen beförderte Fahrzeugkarosserien insbesondere während der einzelnen Montageschritte an den entsprechenden Montagepositionen von den Trägergestellen auf durch Bearbeitungs- und Handlingseinheiten gebildete indexierte Halteposition abzusenken.

Mithin können derartige Drehtische u.a. einen um eine Dreh- oder Schwenkachse rotierenden Drehkörper aufweisen, an dem beispielsweise die wenigstens eine Bearbeitungs- und Handlingseinheit angeordnet ist. Hierfür können die Drehvorrichtungen durch einen Antrieb gesteuert angetrieben werden. Insbesondere muss die gesteuerte Antriebsbewegung dabei den Drehkörper um einen sehr exakt vorgegebenen Schrittwinkel weiterbewegen, also weiterdrehen. In der anschließend erreichten Halteposition, in der dann beispielsweise die Bearbeitung des Werkstückes erfolgt, müssen der Drehkörper bzw. die daran angeordnete Bearbeitungs- und Handlingseinheit weitgehend spielfrei, d.h. lagefixiert, arretiert werden.

Gefordert wird für derartige Drehvorrichtungen damit eine hohe Genauigkeit und Spielfreiheit des Antriebs, so dass jede erforderliche Dreh- oder Winkelstellung des Drehkörpers bzw. der daran angeordneten Bearbeitungs- und Handlingseinheit mit hoher Präzision angefahren werden kann.

Aus der auf die Anmelderin zurückgehenden Druckschrift DE 10 2013 109 307 A1 ist dabei eine Drehvorrichtung mit einer Aufnahme zur Aufnahme eines Werkstückes oder Werkzeuges bekannt geworden, bei der die Aufnahme durch einen Antrieb gesteuert um eine Aufnahmeachse schenk- oder drehbar ist und bei der der Antrieb als Antriebselement einen Torquemotor aufweist. Die Druckschrift DE 10 2013 109 307 A1 zeichnet sich dadurch aus, dass mit einer Ausgangswelle des Torquemotors eine Trommelkurve unmittelbar verbunden ist, die eine Achse der Ausgangswelle wendelartig umschließt und in die für den Antrieb der Aufnahme mit dieser verbundene Mitnehmer eingreifen. In anderen Worten wird also die um eine Aufnahmeachse drehbar gelagerte Aufnahme indirekt über den Torquemotor angetrieben, indem dieser eine lotrecht zur Aufnahmeachse drehende Trommelkurve antreibt, indem an der Aufnahme vorgesehene Mitnehmer in die Trommelkurve eingreifen.

Die Druckschrift EP 1 754 566 A1 offenbart einen Rundschalttisch mit einem Teller, welcher in eine Kurventrommel eingreifende Mitnehmer aufweist, wobei der Teller relativ zu einem stationären Mittenteil über die Kurventrommel drehend antreibbar ist, die ihrerseits über zumindest ein Kraftübertragungselement von einem Motor zu einer Drehbewegung um ihre Längsachse beaufschlagbar ist. Dabei ist im Bereich der Kurventrommel und/oder im Bereich eines Kraftübertragungselements und/oder im Bereich der Mitnehmer ein ein Ausgangssignal generierender, auf Druck und/oder Zug reagierender Messaufnehmer vorgesehen, wobei weiterhin auch eine Auswerteeinheit zur Abgabe eines Motor-Stoppsignals bei Überschreitung eines Schwellwerts durch das Ausgangssignal vorgesehen ist.

Aus der Druckschrift EP 3 560 653 A2 ist ein Drehtisch für eine Fräsmaschine bekannt geworden, umfassend eine Erfassungseinrichtung, die zum Messen und/oder Berechnen eines Spiels zwischen zwei zusammenpassenden Komponenten des Drehtisches konfiguriert ist, und eine Übertragungseinrichtung, die zum Übertragen des Gemessenen/Berechneten konfiguriert ist Freigabe an eine zentrale Verarbeitungseinheit. Die zusammenpassenden Komponenten des Drehtisches sind eine Schnecke und ein Schneckenrad.

Bei derartigen aus dem Stand der Technik bekannten Drehtischen kann bei Schäden oder Ausfällen von Bauteilen nicht nachvollzogen werden, ob dies aus einer Fehlbedienung des Bedienpersonals, einem Materialfehler, einem Auslegungsfehler von Bauteilen oder fehlender Wartung resultiert. Ferner können Wartungsintervalle derartiger Drehtische nicht abhängig von dem tatsächlich auftretenden Verschleiß von Bauteilen, also bedarfsabhängig, durchgeführt werden, sondern müssen nach fest vorgegebenen Intervallen, wie beispielsweise in Abhängigkeit einer fest vorgegebenen Schaltanzahl oder einer festgelegten Betriebsdauer erfolgen.

Aufgabe der Erfindung ist es daher, ein Drehtischsystem zur Aufnahme von wenigstens einer Bearbeitungs- und/oder Handlingseinheit aufzuzeigen, welches die Nachteile aus dem Stand der Technik vermeidet.

Diese Aufgabe wird durch ein Drehtischsystem zur Aufnahme von wenigstens einer Bear-beitungs- und/oder Handlingseinheit mit den Merkmalen des Patentanspruches 1 gelöst. Die Unteransprüche betreffen dabei besonders vorteilhafte Ausführungsvarianten der Erfindung.

Der wesentliche Aspekt der vorliegenden Erfindung ist darin zu sehen, ein Drehtischsystem zur Aufnahme von wenigstens einer Bearbeitungs- und/oder Handlingseinheit vorzusehen, umfassend einen um eine Drehachse drehbar angeordneten Drehkörper zur Aufnahme der zumindest einen Bearbeitungs- und/oder Handlingseinheit. Der Drehkörper ist dabei zur Einleitung einer Drehbewegung über mehrere Mitnehmer mit einer wendelförmigen Trommelkurve in Eingriff bringbar, die in einem Gehäuse aufgenommen und um eine Trommelachse motorisch drehbar antreibbar ausgebildet ist, wobei an oder innerhalb des Gehäuses ein Sensormodul mit zumindest einer Sensoreinheit zur Erfassung zumindest eines Zustands- und/oder Betriebsparameters wenigstens der Trommelachse vorgesehen ist. Besonders vorteilhaft werden damit die für die Wartung- und oder den Verschleiß eines solchen Drehtisches ausschlaggebenden Parameter, wie beispielsweise Temperatur der Trommelachse und/oder Vibration des Drehtischsystems und/oder Drehzahl und/oder Drehanzahl der Trommelachse, mittels des Sensormoduls erfasst und können nachfolgend unter Einbeziehungen einer Steuereinheit für eine Zustandsüberwachung und/oder Diagnose herangezogen und ausgewertet werden. Hierdurch wird ein Drehtischsystem bereitgestellt, bei dem durch die Zustandsüberwachung typischerweise Vorhersagen, insbesondere vorausschauende Vorhersagen, über Wartungs- und/oder andere Unterstützung erfordernde Zustände aus den erfassten Betriebsparametern abgeleitet werden können.

Gemäß einer vorteilhaften Ausführungsvariante kann dabei vorgesehen sein, dass das Sensormodul einen gehäuseförmigen Modulkörper zur Aufnahme der mindestens einen Sensoreinheit aufweist.

Gemäß einer weiteren vorteilhaften Ausführungsvariante kann dabei vorgesehen sein, dass das Sensormodul mit seinem Modulkörper fest jedoch lösbar an oder in dem Gehäuse des Drehtischsystems angeordnet ist.

Gemäß einer nochmals weiteren vorteilhaften Ausführungsvariante kann dabei vorgesehen sein, dass das Sensormodul in einer derartigen räumlichen Nähe zur Trommelachse an oder in des Gehäuses angeordnet ist, dass die wenigstens eine Sensoreinheit mit der Trommelachse zusammenwirken kann.

Gemäß einer nochmals weiteren vorteilhaften Ausführungsvariante kann dabei vorgesehen sein, dass das Sensormodul derart außen an dem Gehäuse angeordnet ist, dass ein in dem Modulkörper ausgebildete Öffnung die Trommelachse zumindest teilweise aufnimmt, so dass die zumindest eine Sensoreinheit im Bereich der Trommelachse vorgesehen ist.

Erfindungsgemäß ist dabei vorgesehen, dass das Sensormodul wenigstens eine erste Sensoreinheit zur Erfassung eines ersten Betriebsparameters, insbesondere eines ersten IST-Betriebsparameter, und/oder eine zweite Sensoreinheit zur Erfassung eines zweiten Betriebsparameters, insbesondere eines weiten IST-Betriebsparameter, und/oder eine dritte Sensoreinheit zur Erfassung eines dritten Betriebsparameters, insbesondere eines dritten IST-Betriebsparameter, aufweist.

Erfindungsgemäß ist dabei ferner vorgesehen, dass die erste Sensoreinheit als Temperatursensoreinheit zur Erfassung des ersten IST-Betriebsparameters in Form der Trommelachsentemperatur ausgebildet ist.

Gemäß einer nochmals weiteren vorteilhaften Ausführungsvariante kann dabei vorgesehen sein, dass die erste Sensoreinheit als IR-Sensoreinheit oder Temperatur-Widerstandssensoreinheit ausgebildet ist.

Erfindungsgemäß ist dabei ferner vorgesehen, dass die zweite Sensoreinheit als Winkelsensoreinheit zur Erfassung des zweiten IST-Betriebsparameters in Form der Drehzahl und/oder Anzahl an Drehungen der Trommelkurve und/oder der Trommelachse ausgebildet ist.

Gemäß einer nochmals weiteren vorteilhaften Ausführungsvariante kann dabei vorgesehen sein, dass die zweite Sensoreinheit als Inkremetalsensoreinheit oder optische Sensoreinheit oder Hallsensoreinheit ausgebildet ist.

Erfindungsgemäß ist dabei auch vorgesehen, dass die dritte Sensoreinheit als Vibrationssensoreinheit zur Erfassung des dritten IST-Betriebsparameters in Form der Vibrationsstärke und/oder Schwingungen des Drehtischsystems ausgebildet ist.

Gemäß einer nochmals weiteren vorteilhaften Ausführungsvariante kann dabei vorgesehen sein, dass das Sensormodul mit dritter Sensoreinheit unmittelbar an dem Gehäuse angeordnet ist, so dass sich von dem Drehtischsystem ausgehende Schwingungen auf das Sensormodul übertragen.

Gemäß einer nochmals weiteren vorteilhaften Ausführungsvariante kann dabei vorgesehen sein, dass das Sensormodul eine Platine aufweist, die fest mit dem Modulkörper verbunden, insbesondere verklebt ist, wobei auf der Platine die zumindest eine Sensoreinheit, eine Steuereinheit sowie ein erster und/oder zweiter Anschluss vorgesehen sind.

Gemäß einer nochmals weiteren vorteilhaften Ausführungsvariante kann dabei vorgesehen sein, dass die Platine im Randbereich der Öffnung fest mit Modulkörper verbunden, insbesondere verklebt, ist.

Erfindungsgemäß ist schließlich vorgesehen, dass die mittels der zumindest einen Sensoreinheit erfassten IST-Betriebsparameter unter Einbeziehung einer in der Steuereinheit ausgeführten Auswerteroutine ausgewertet werden und in Abhängigkeit der Auswertung Vorhersagen, insbesondere vorausschauende Vorhersagen, über Wartungs- und/oder andere Unterstützung erfordernde Zustände aus den erfassten IST-Betriebsparameter abgeleitet werden.

Gemäß einer nochmals weiteren vorteilhaften Ausführungsvariante kann dabei vorgesehen sein, dass die Steuereinheit wenigstens eine Prozessoreinheit zur Ausführung der Auswerteroutine und eine mit der Prozessoreinheit zusammenwirkende Speichereinheit zum zumindest zeitweisen Speichern oder Zwischenspeichern von Auswertedaten aufweist, die über eine Schnittstelle von der Steuereinheit an die zumindest einen Sensoreinheit übertragen und/oder empfangen werden.

Gemäß einer nochmals weiteren vorteilhaften Ausführungsvariante kann dabei vorgesehen sein, dass die Auswertedaten aktuell mittels der zumindest einen Sensoreinheit erfasste IST-Betriebsparameter als IST-Auswertedaten sowie entsprechende Soll-Auswertedaten als SOLL-Betriebsparameter umfassen.

Gemäß einer nochmals weiteren vorteilhaften Ausführungsvariante kann dabei vorgesehen sein, dass die Prozessoreinheit dazu eingerichtet ist, über die Schnittstelle von der zumindest einen Sensoreinheit empfangene Ist-Auswertedaten mit Soll-Auswertedaten zu vergleichen und abhängig davon vorausschauende Vorhersagen über Wartungs- und/oder andere Unterstützung erfordernde Zustände abzuleiten und/oder einen Fehlerzustand zu protokollieren.

Gemäß einer nochmals weiteren vorteilhaften Ausführungsvariante kann dabei vorgesehen sein, dass bei einem Über- oder Unterschreiten der Ist-Auswertedaten mit vorgegebenen SOLL-Auswertedaten eine Störmeldung als Fehlermeldung in der Speichereinheit abgespeichert wird.

Gemäß einer nochmals weiteren vorteilhaften Ausführungsvariante kann dabei vorgesehen sein, dass das Sensormodul über den ersten Anschluss mit einem IO-Link-Master sowie einem Bussystem mit einer übergeordneten Steuereinheit und/oder einem Servo Controller verbunden wird.

Gemäß einer nochmals weiteren vorteilhaften Ausführungsvariante kann dabei vorgesehen sein, dass die auf der Speichereinheit gespeicherten Auswertedaten zyklisch oder in Echtzeit an die übergeordnete Steuereinheit übertragen werden.

Unter "getaktet" wird im Rahmen der vorliegenden Erfindung eine intermittierende Bewegungen verstanden, die sich im Gegensatz zu einer kontinuierlichen Bewegung durch schrittweise oder periodisch wiederkehrende Bewegungsabläufe auszeichnen, und zwar mit einem Stillstand nach oder vor jedem Bewegungsschritt. Ein intermittierend bewegtes Element, das beispielsweise eine, um einen gewissen Winkelbetrag rotierende Abtriebswelle einer Torque-Motor-Einheit sein kann, vollzieht hierbei ein Bewegungsprofil, bei dem die Abtriebswelle periodisch nahezu stoß- und/oder ruckfrei auf eine gewisse Winkelgeschwindigkeit beschleunigt und anschließend wieder abgebremst wird.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Obwohl manche Aspekte im Zusammenhang mit einer Vorrichtung beschrieben wurden, versteht es sich, dass diese Aspekte auch eine Beschreibung des entsprechenden Verfahrens darstellen, so dass ein Block- oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparates) wie z. B. einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Die Erfindung wird im Folgenden anhand der Figuren an Ausführungsbeispielen näher erläutert. Es zeigen:
- Fig. 1: in vereinfachter perspektivischer Darstellung eine beispielhafte Ausführungsvariante eines erfindungsgemäßen Drehtischsystems,
- Fig. 2: eine Seitenansicht einer weiteren beispielhaften Ausführungsvariante eines erfindungsgemäßen Drehtischsystems,
- Fig. 3: eine Ausführungsvariante des Drehtischsystems in einer Schnittdarstellung durch eine Schnittebene, die lotrecht durch die Trommelachse sowie durch die Drehachse verläuft,
- Fig. 4: eine Ausführungsvariante einer freigestellten Trommelkurve in perspektivischer Darstellung,
- Fig. 5: die freigestellte Trommelkurve mit darin aufgenommenem Torquemotor in einer Schnittdarstellung durch eine Schnittebene entlang der Trommelachse,

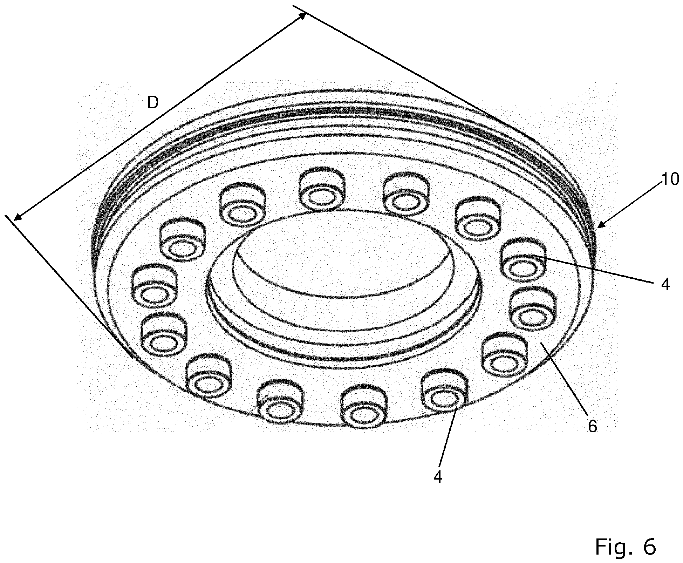

- Fig. 6: ein freigestellter Drehkörper in einer Perspektivansicht,

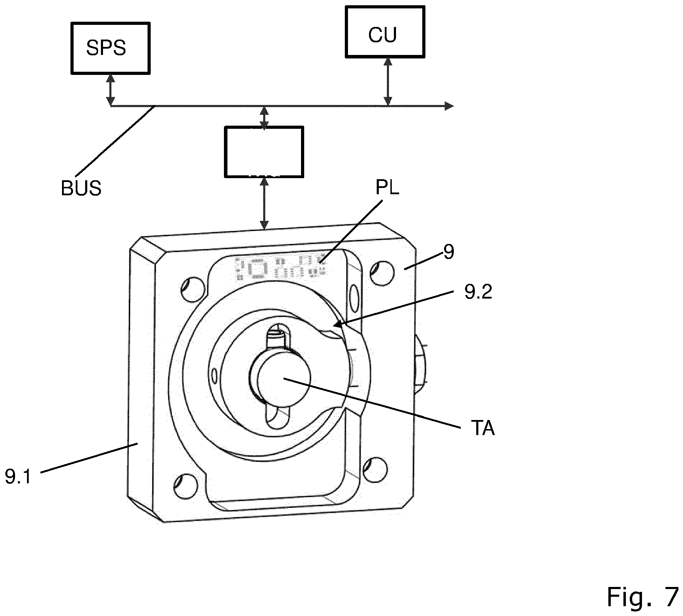

- Fig. 7: ein Blockschaltbild eines erfindungsgemäßen Drehtischsystems,

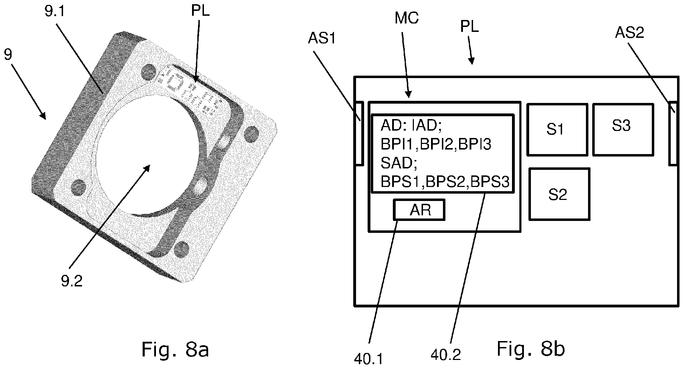

- Fig.8a und 8b: in vereinfachter perspektivischer Darstellung eine beispielhafte Ausführungsvariante eines freigestellten Moduls sowie der zugehörigen Platine.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind. Auch ist die Erfindung in den Figuren nur als schematische Ansicht zur Erläuterung der Arbeitsweise dargestellt. Insbesondere dienen die Darstellungen in den Figuren nur der Erläuterung des grundlegenden Prinzips der Erfindung. Aus Gründen der Übersichtlichkeit ist darauf verzichtet worden, alle Bestandteile der Vorrichtung zu zeigen.

In den Figuren ist mit 1 eine beispielhafte Ausführungsvariante eines erfindungsgemäßen Drehtischsystems zur Aufnahme von wenigstens einer Bearbeitungs- und/oder Handlingseinheit 2 gezeigt, die einen um eine Drehachse DA drehbar angeordneten Drehkörper 6 zur Aufnahme der zumindest einen Bearbeitungs- und/oder Handlingseinheit 2 aufweist. Bei den nur stilisiert in den Figuren dargestellten Bearbeitungs- und Handlingseinheiten 2 kann es sich insbesondere um Bodenspanner handeln, die beispielsweise verwendet werden, um auf Trägergestellen entlang einer Montagelinie beförderte Fahrzeugkarosserien insbesondere während der einzelnen Montageschritte an den entsprechenden Montagepositionen von den Trägergestellen auf die entsprechenden an einer Drehvorrichtung 1 angeordneten Bodenspanner abzusenken.

In der Regel sind hierfür je nach Fahrzeugtyp, bzw. Fahrzeugkarosse zwischen vier und sechs Bodenspanner, und damit auch vier bis sechs Drehvorrichtungen 1 erforderlich, die um ein sich in einer Montageposition befindliches Trägergestell angeordnet sind. Vorzugsweise sind dabei jeweils zwei Drehtischsysteme 1 an entlang der Längsseite des Trägergestells gegenüberliegenden Positionen vorgesehen, beispielsweise derart, dass die entsprechende Karosserie sowohl in ihrem vorderen, als auch hinteren Bereich auf jeweils zwei gegenüberliegenden oder im Wesentlichen gegenüberliegen Auflagepunkten abgesenkt werden kann.

Vorzugsweise können an einem Drehtischsystem 1 mehrere Bearbeitungs- und Handlingseinheiten 2, beispielsweise unterschiedliche Bodenspanner, vorgesehen sein, die beispielsweise an unterschiedliche Abmessungen der Fahrzeugkarossen bzw. Fahrzeugtypen angepasst sind. Die mehreren Bearbeitungs- und Handlingseinheiten 2 sind an einem Drehkörper 6 fest, jedoch austauschbar, beispielsweise verschraubt, angeordnet. Die mehreren Bearbeitungs- und Handlingseinheiten 2 können in gleichmäßigen oder näherungsweise gleichmäßigen Winkelabständen um die Dreh- oder Schwenkachse DA verteilt an dem Drehkörper 6 angeordnet sein, in beispielsweise einen gleichen radialen Abstand zur die Drehachse DA. Besonders vorteilhaft sind vier Bearbeitungs- und Handlingseinheiten 2 an dem Drehkörper 6 vorgesehen, wobei die Bearbeitungs- und Handlingseinheiten 2 jeweils paarweise gegenüberliegend an dem Drehkörper 6 angeordnet sind.

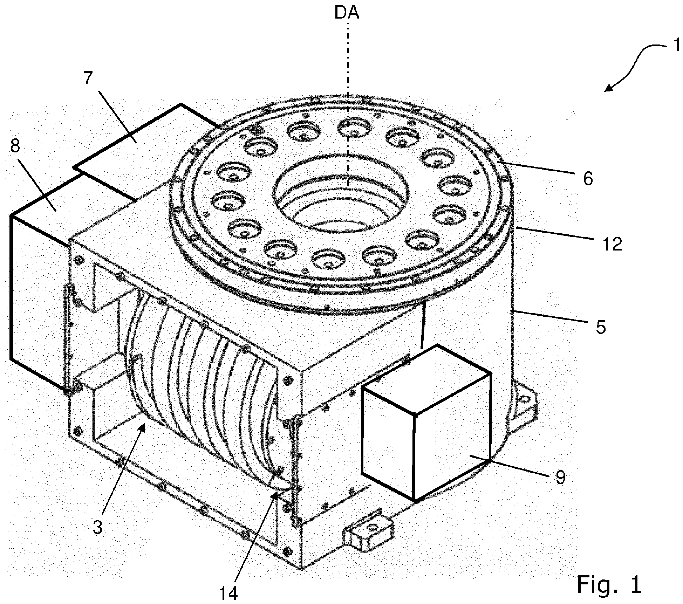

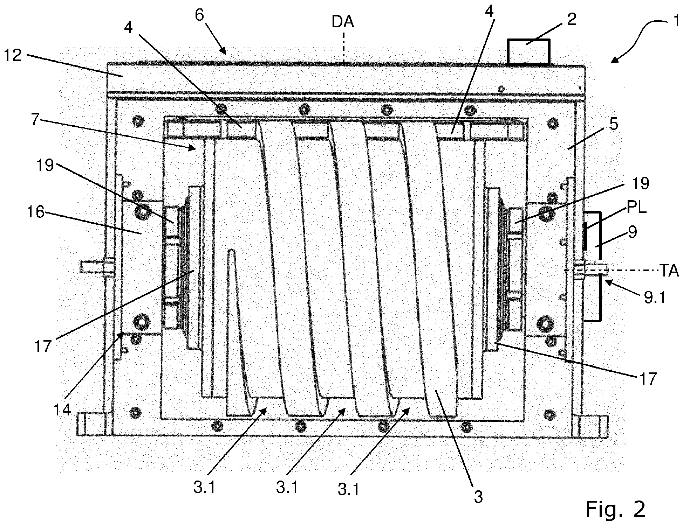

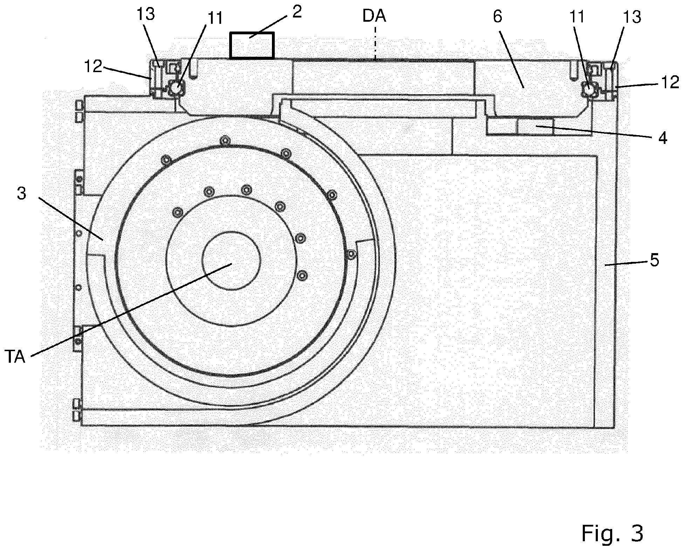

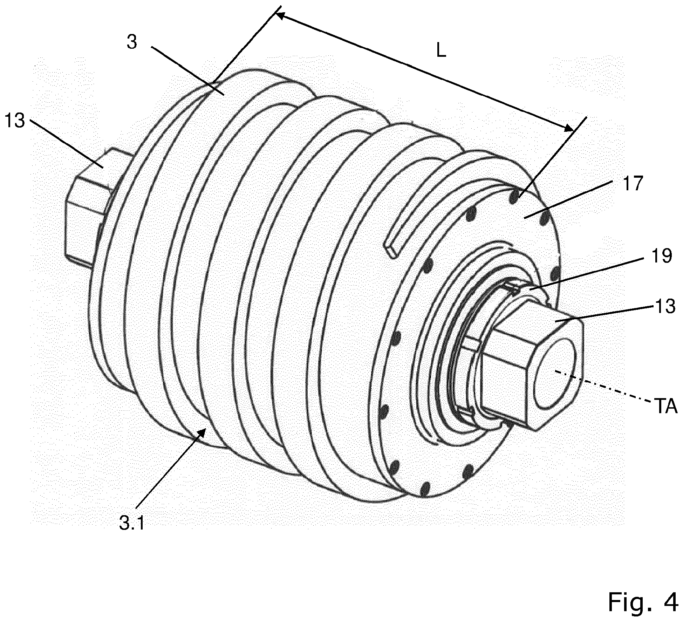

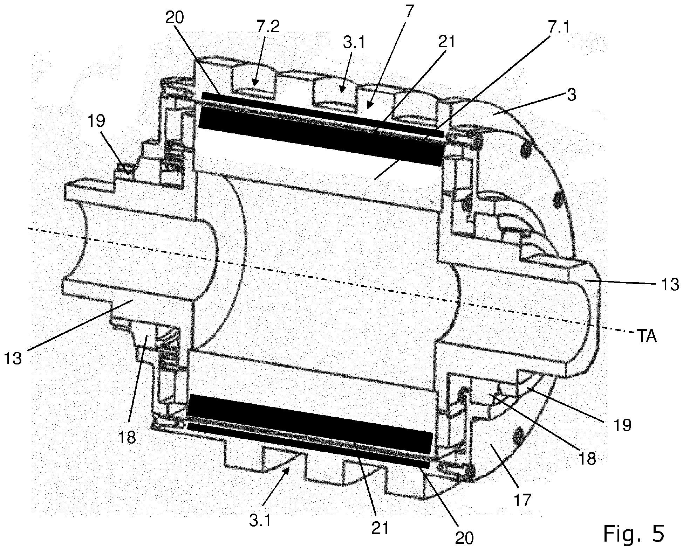

Dabei ist der Drehkörper 6 zur Einleitung einer Drehbewegung um die Drehachse DA über mehrere Mitnehmer 4 mit einer wendelförmigen Trommelkurve 3 direkt in Eingriff bringbar, die um eine zur Drehachse DA lotrecht orientierte Trommelachse TA direkt oder indirekt antreibbar ausgebildet ist. Die Trommelkurve 3 ist in einem Gehäuse 5 aufgenommen und um eine Trommelachse TA motorisch drehbar antreibbar ausgebildet. Die Trommelkurve 3 wiederum kann mittels eines motorischen Antriebs 7 mittelbar, beispielsweise unter Zwischenschaltung eines Getriebes 8, oder in der nachstehend noch nähergehend erläuterten Weise unmittelbar, also ohne Zwischengetriebe, angetrieben werden. Dabei kann das Getriebe 8 als Umlenk- oder Winkelgetriebe, beispielsweise als Stirnrad- oder Planetengetriebe ausgebildet sein, das eine Drehbewegung insbesondere um 90° Grad umlenkt. Ein schematisch angedeutetes Umlenkgetriebe 8 mit daran kraftschlüssig zusammenwirkenden Antrieb 7 ist in Figur 1 angedeutet. Ein Direktantrieb der Trommelkurve 3, also ein Antrieb 7 ohne Zwischenschaltung eines Getriebes zeigen die Figuren 2 bis 5. Der Antrieb 7 kann dabei als elektrischer Antriebsmotor, insbesondere als Drehstrommotor oder Servoantrieb, insbesondere als Gleichstrommotor, Asynchronmotor oder Synchronmotor ausgebildet sein. Besonders vorteilhaft ist der Antrieb 7 als Torquemotor ausgebildet.

Unabhängig von der Ausbildung der Antriebs 7 sind die Mitnehmer 4 dabei als Kurvenrollen ausgebildet, die drehbar gelagert an dem Drehkörper 6 angeordnet sind. Vorzugsweise sind die mehreren Mitnehmer 4 in gleichen oder näherungsweise gleichen Winkelabständen um die Drehachse DA verteilt an dem Drehkörper 6 angeordnet, und zwar vorzugsweise kreis- bzw. sternförmig um die Drehachse DA verteilt. In anderen Worten liegen die Mitnehmer 4 also mit ihren jeweiligen Mittelachsen, um die sie jeweils drehbar an dem Drehkörper 6 befestigt sind, auf einem gemeinsamen Radius von der Drehachse DA entfernt.

Mehr im Detail sind die Mitnehmer 4 an der den Bearbeitungs- und Handlingseinheiten 2 gegenüberliegenden Unterseite des Drehkörpers 6, also an der der Trommelkurve 3 zugewandten Seite des Drehkörpers 6, vorgesehen.

Dabei ist der Drehkörper 6 teller- bzw. scheibenförmig ausgebildet und weist zentrisch eine Durchgangsöffnung auf. Insbesondere ist der Drehkörper 6 als Drehteller mit einer kreisförmigen zentrischen Ausnehmung ausgebildet. Außenumfangsseitig weist der Drehkörper 6 einen Lagersitz 10 auf, mittels dem der Drehkörper 6 über ein Lager 11, das insbesondere als Drehwälzlager ausgebildet ist, in einem an einem Gehäuse 5 befestigen, ortsfesten Lagerring 12 um die Drehachse DA drehbar gelagert aufgenommen ist. Der Lagerring 12 umschließt dabei den Drehkörper 6 vollumfänglich und ist mittels Zentrierstiften 13 an dem Gehäuse 5 befestigt. In anderen Worten ist also der Drehkörper 6 relativ beweglich zu dem ortsfesten Lagerring 12 um die Drehachse DA drehbar ausgebildet.

Wie bereits obenstehend erwähnt, kann dabei der Antrieb 7 des Drehsystems zum motorischen Antrieb der Trommelkurve 3 beispielsweise als Torquemotor mit einem Stator 7.1 sowie einem relativ dazu um die Trommelachse TA drehbar angetriebenen Rotor 7.2 ausgebildet sein, wie dies in den Figuren 2 bis 5 gezeigt ist. Der Antrieb 7 in Form eines Torquemotors kann dabei mehr im Detail als Außenläufer ausgebildet sein, bei dem der ruhende, innenliegende Stator 7.1 von dem dazu relativ rotierenden, außenliegenden Rotor 7.2 umschlossen ist. Ferner kann sich diese Form des Antriebs 7 auch dadurch auszeichnen, dass der um die Trommelachse TA rotierende Rotor 7.2 an seiner dem innen liegenden Stator 7.1 abgewandten Außenmantelfläche die Trommelkurve 3 aufweist. Dabei weist die Trommelkurve 3 einen durchgängig gewendelten, nutförmigen Gewindegang 3.1 mit einer gleichmäßigen Steigung auf. Der nutförmige Gewindegang 3.1 der Trommelkurve 3 kann aus einem gehärteten metallischen Werkstoff, beispielsweise einem gehärteten Stahl, gebildet sein. Zur Einleitung einer Drehbewegung von dem aktiv angetriebenen Rotor 7.2 des Torquemotors 7 auf den Drehkörper 6, greifen die an der Unterseite des Drehkörpers 6 vorgesehenen Mitnehmer 4 in den gewendelten Gewindegang 3.1 der Trommelkurve 3 ein, die (Trommelkurve) ihrerseits drehfest an dem Rotor 7.2 vorgesehen ist. Es versteht sich, dass sämtliche im Zusammenhang des Direktantriebs beschriebenen Merkmale der Trommelkurve 3 soweit möglich und sinnvoll auch Gültigkeit für ein Antriebskonzept unter Zwischenschaltung eines Getriebes 8, insbesondere eines Umlenkgetriebes, Gültigkeit besitzen.

Besonders vorteilhaft kann dabei der Rotor 7.2 an der Außenmantelfläche der Trommelkurve 3 ausbildet sein, indem der Rotor 7.2 und die Trommelkurve 3 einteilig, insbesondere einstückig, ausgebildet sind. In anderen Worten bildet also der Rotor 7.2 mit seiner Außenmantelfläche die Trommelkurve 3 aus, so dass Rotor 7.2 und Trommelkurve 3 als ein einstückiges Bauteil herstellbar ist.

Dabei kann der Stator 7.1 an seinen gegenüberliegenden Enden entlang der Trommelachse TA über jeweils seitlich an dem Stator 7.1 fest angeflanschte Befestigungsabschnitt 13 aus dem Bereich des Rotors 7.2 herausgeführt sein. Mittels den Befestigungsabschnitten 13 kann der Stator 7.1 lage- und drehfest innerhalb eines Gehäuse 5 aufgenommen sein. Die Befestigungsabschnitt 13 weisen an der jeweiligen Außenmantelfläche eine von der kreisform abweichende Geometrie auf, beispielsweise bilden die Befestigungsabschnitte 13 einen Vierkant aus.

Mehr im Detail können die Befestigungsabschnitte 13 jeweils in einer an die Außengeometrie angepasst Aufnahme 14 des Gehäuses 5 lage- und drehfest aufgenommen sein. Ferner kann der jeweilige Befestigungsabschnitt 13 mittels einer entsprechenden Adaptereinrichtung 16 in der zugehörigen Aufnahme 14 aufgenommen sein. Vorteilhaft ist somit vorgesehen, dass der Torquemotor 7 mittels dem feststehenden Stator 7.1 drehfest innerhalb, vorzugsweise vollständig innerhalb, des Gehäuses 5 aufgenommen ist.

Dabei kann der Rotor 7.2 an beiden freien Enden über einen kreisscheibenförmigen Gehäusering 17 jeweils über ein Lager 18 mittels einer Wellenmutter 19 an dem jeweiligen Befestigungsabschnitt 13 angeordnet sein und zwar relativ zu den Befestigungsabschnitten 13 drehbeweglich um die Trommelachse TA und damit drehbeweglich zu dem mit dem Befestigungsabschnitt 13 fest verbundenen Stator 7.1. Dabei kann auch vorgesehen sein, dass die beiden seitlich an dem Stator 7.1 fest angeflanschten Befestigungsabschnitte 13 Teil oder Bestandteil des Stators 7.1 sind, dass der Stator 7.1 also die Befestigungsabschnitte 13 aufweist.

Ferner vorteilhaft kann dabei der ruhende, ortsfeste Stator 7.1 vollständig innerhalb des Rotors 7.2 aufgenommen sein und den Rotor 7.2 seitlich lediglich mit seinen Befestigungsabschnitten 13 überragen. Der Stator 7.1 erstreckt sich dabei vorzugsweise zentrisch entlang der Trommelachse TA und damit zentrisch innerhalb des Rotors 7.2. Dabei kann jedoch vorgesehen sein, dass die Trommelachse TA der Trommelkurve 3 seitlich versetzt zur Drehachse DA des Drehkörpers 6 ausgebildet ist. Auch vorteilhaft kann der Rotor 7.2 eine Länge L entlang der Trommelachse TA aufweisen, die im Wesentlichen einem Durchmesser D des Drehkörper 6 entspricht, so dass eine möglichst kompakte Bauweise der erfindungsgemäßen Drehvorrichtung 1 erreicht wird. Weiterhin vorteilhaft entspricht dabei die Länge L des Rotors 7.2 im Wesentlichen der Länge der Trommelkurve 3 entlang der Trommelachse TA, so dass sich die Trommelkurve 3 über die gesamte Längserstreckung des Rotors 7.2 entlang der Trommelachse TA erstreckt.

Überdies können an einer Innenwandung des Rotors 7.2 ein oder mehrere Permanentmagnete 20 in gleichmäßigen oder näherungsweise gleichmäßigen Winkelabständen um die Trommelachse TA herum vorgesehen angeordnet sein. Beispielsweise kann der Permanentmagnet 20 als umlaufende Permanentmagnetschicht an der Innenwandung des Rotors 7.2 ausgebildet sein. Alternativ können an der Innenwandung des Rotors 7.2 auch mehrere Einzelpermanentmagnete 20 vorgesehen sein, wobei benachbarte Permanentmagnete 20 jeweils beabstandet und gegenpolig zueinander orientiert in der Innenwandung des Rotors 7.2 vorgesehen sind. Dabei kann auch vorgesehen sein, dass die Innenwandung des Rotors 7.2 aus einem hartmagnetischen Material, insbesondere einer Legierung aus Eisen, Cobalt, Nickel oder Ferriten, einteilig, insbesondere einstückig mit dem Rotor 7.2 hergestellt ist und die den einen oder die mehreren Permanentmagnete 20 ausbildet.

Mithin kann der feststehende Stator 7.1 mehrere Spulen 21 aufweisen, die mit dem einen oder mehreren Permanentmagneten 20 des Rotors 7.2 in Wirkverbindung stehen und den Torquemotor 7 ausbilden. Besonders vorteilhaft ist damit der Torquemotor 7 vollständig innerhalb der Kurventrommel 3, die gleichzeitig den Rotor 7.2 ausbildet, aufgenommen, so dass ein besonders kompakter konstruktiver Aufbau geschaffen ist.

Erfindungsgemäß ist an oder innerhalb des Gehäuses 5 ein Sensormodul 9 mit mehreren Sensoreinheiten S1, S2, S3 zur Erfassung zumindest eines Zustands- und/oder Betriebsparameters BP1, BP2, BP3 wenigstens der Trommelachse TA vorgesehen.

Das Sensormodul 9 kann dabei einen gehäuseförmigen Modulkörper 9.1 zur Aufnahme der mindestens einen Sensoreinheit S1, S2, S3 aufweisen. Insbesondere ist das Sensormodul 9 mit seinem Modulkörper 9.1 fest, jedoch lösbar, und somit auch nachrüstbar, an oder in dem Gehäuse 5 des Drehtischsystems 1 angeordnet, beispielsweise verschraubt.

Das Sensormodul 9 ist dabei jedoch in einer derartigen räumlichen Nähe zur Trommelachse TA an dem Gehäuse 5 angeordnet, dass die wenigstens eine in dem Modulkörper 9.1 aufgenommene Sensoreinheit S1, S2, S3 mit der Trommelachse TA zusammenwirken kann. Vorteilhaft ist das Sensormodul 9 an einem, dem motorischen Antrieb 7 gegenüberliegenden Ende der Trommelkurve 3 vorgesehen, und beispielsweise vollständig innerhalb des Gehäuses 5 aufgenommen, also in das Gehäuse 5 integriert oder außen an dem Gehäuse 5 fest, jedoch lösbar, angeordnet.

Mehr im Detail kann das Sensormodul 9 auch außerhalb des Gehäuses 5 an einem dem motorischen Antrieb 7 gegenüberliegenden Ende der Trommelkurve 3 derart angeordnet sein, dass eine in dem Modulkörper 9.1 ausgebildete Öffnung 9.2 die Trommelachse TA zumindest teilweise umschließt bzw. aufnimmt, so dass die zumindest eine Sensoreinheit S1, S2, S3 im Bereich der Trommelachse TA vorgesehen ist.

Dabei weist das Sensormodul 9 eine erste Sensoreinheit S1 zur Erfassung eines ersten Betriebsparameters BP1 und eine zweite Sensoreinheit S2 zur Erfassung eines zweiten Betriebsparameters BP2 und eine dritte Sensoreinheit S3 zur Erfassung eines dritten Betriebsparameters BP3 auf. Insbesondere handelt es sich bei den durch die Sensoreinheiten S1, S2, S3 erfassten ersten bis dritten Betriebsparameter BP1, BP2, BP3 um IST-Betriebsparameter BPI1, BPI2, BPI3, wie in den Ansprüchen definiert.

Hierbei ist die erste Sensoreinheit S1 als Temperatursensoreinheit zur Erfassung des ersten IST-Betriebsparameters BPI1 in Form der Trommelachsentemperatur ausgebildet. Mehr im Detail kann die erste Sensoreinheit S1 hierfür als IR-Sensoreinheit oder Temperatur-Widerstandssensoreinheit ausgebildet sein. Insbesondere ist das Sensormodul 9 derart angeordnet, dass die erste Sensoreinheit S1 in unmittelbarer räumlicher Nähe zur Trommelachse TA, vorzugsweise in einem Abstand zwischen 5mm und 80mm, vorgesehen ist.

Ferner ist die zweite Sensoreinheit S2 als Winkelsensoreinheit zur Erfassung des zweiten IST-Betriebsparameters BPI2 in Form der Drehzahl, beispielsweise angegeben in Umdrehungen pro Minuten, und/oder Anzahl an Drehungen, beispielsweise Aufsummieren der Umdrehungen für ein vorbestimmtes Zeitintervall (z.B. Absolute Anzahl an Umdrehungen zwischen zwei Wartungsintervallen), der Trommelkurve 3 und/oder der Trommelachse TA ausgebildet. Mehr im Detail kann die zweite Sensoreinheit S2 als Inkremetalsensoreinheit, optische Sensoreinheit oder Hallsensoreinheit ausgebildet sein. Für den Fall, dass die zweite Sensoreinheit S2 als Hallsensoreinheit ausgebildet ist, wird an der einer an der Trommelachse TA freiendseitig vorgesehenen und mit der Trommelachse TA drehfest verbunden Nocke 22 ein mit der Nocke 22 mitdrehender Magnet 23, insbesondere ein Permanentmagnet, vorgesehen. Der Magnet 23 kann dabei in oder an der mit der Trommelachse TA synchron mitdrehenden Nocke 22 angeordnet sein.

Die dritte Sensoreinheit S3 ist dabei als Vibrationssensoreinheit zur Erfassung des dritten IST-Betriebsparameters BPI3 in Form der Vibrationsstärke und/oder Schwingungen des Drehtischsystems 1 ausgebildet. Weist das Sensormodul 9 eine derartige dritte Sensoreinheit S3 auf, so ist es besonders vorteilhaft, wenn das Sensormodul 9 mit dem Modulkörper 9.1 unmittelbar, also kontaktschlüssig an dem Gehäuse 5 angeordnet ist, so dass sich von dem Drehtischsystem 1 ausgehende, also verursachte Schwingungen auf das Sensormodul 9 übertragen.

Ferner kann das Sensormodul 9 eine Platine PL aufweisen, die fest mit dem Modulkörper 9.1 verbunden, beispielsweise verklebt ist. Insbesondere kann auf der Platine PL die zumindest eine Sensoreinheit S1, S2, S3, vorzugsweise die erste, zweite sowie dritte Sensoreinheit S1, S2, S3, eine Steuereinheit MC sowie ein erster und zweiter Anschluss AS1, AS2 vorgesehen sein. Die Platine PL ist damit Teil oder Bestandteil des Sensormoduls 9. Die Platine PL ihrerseits wiederum kann im Randbereich der Öffnung 9.2 fest mit Modulkörper 9.1 verbunden sein, beispielsweise angeklebt sein. Insbesondere ist die dritte Sensoreinheit S3, also die Vibrationssensoreinheit, auf der Platine PL des Sensormoduls 9 fest angeordnet, beispielsweise aufgelötet.

Der erste Anschluss AS1 der Platine 9 kann als IO-Link-Anschlussstecker, insbesondere als vier poliger M12 IO-LINK Slave-Anschlussstecker, und der zweite Anschluss AS2 als Programmierschnittstellenanschluss ausgebildet sein kann. Zum Schutz der Bauteile kann auch vorgesehen sein, dass die gesamt Platine PL mit Ausnahme der zweiten Sensoreinheit S2 sowie der beiden Anschlüssen AS1, AS2 mit einem Schutzlack überzogen sind.

Mehr im Detail ist vorgesehen, dass die mittels der zumindest einen Sensoreinheit S1, S2, S3 erfassten IST-Betriebsparameter BPI1, BPI2, BPI3 unter Einbeziehung einer in der Steuereinheit MC ausgeführten Auswerteroutine AR ausgewertet werden, und in Abhängigkeit der Auswertung Vorhersagen, insbesondere vorausschauende Vorhersagen, über Wartungs- und/oder andere Unterstützung erfordernde Zustände aus den erfassten IST-Betriebsparameter BPI1, BPI2, BPI3 abgeleitet werden. Insbesondere kann es sich bei den Unterstützung erfordernden Zuständen auch um Fehlerzustände, oder Fehlermeldungen handeln, die ein Abschalten des Drehtischsystems 1 bewirken.

In anderen Worten kann die Auswertung der mittels der zumindest einen Sensoreinheit S1, S2, S3 erfassten IST-Betriebsparameter BPI1, BPI2, BPI3 durch die Auswerteroutine AR erfolgend, die in der Steuereinheit MC ausgeführt wird. Die Steuereinheit MC kann hierzu beispielsweise wenigstens eine Prozessoreinheit 40.1 zur Ausführung der Auswerteroutine AR aufweisen. Ferner weist die Steuereinheit MC beispielsweise eine mit der Prozessoreinheit 40.1 zusammenwirkende Speichereinheit 40.2 zum zumindest zeitweisen Speichern oder Zwischenspeichern von Auswertedaten AD auf, die beispielsweise über eine Schnittstelle von der Steuereinheit 40 an die zumindest einen Sensoreinheit S1, S2, S3 übertragen und/oder empfangen werden.

Die Auswertedaten AD umfassen insbesondere aktuell mittels der zumindest einen Sensoreinheit S1, S2, S3 erfasste IST-Betriebsparameter BPI1, BPI2, BPI3 als IST-Auswertedaten IAD, wie beispielsweise die IST-Temperatur der Trommelachse TA, die IST-Drehzahl der Trommelachse TA, oder die IST-Vibrationsstärke und/oder IST-Schwingungen des Drehtischsystems 1, sowie entsprechende Soll-Auswertedaten SAD als SOLL-Betriebsparameter BPS1, BPS2, BPS3, wie beispielsweise die SOLL-Temperatur der Trommelachse TA, die SOLL-Drehzahl der Trommelachse TA, oder die SOLL-Vibrationsstärke und/oder SOLL-Schwingungen des Drehtischsystems 1,

Die Prozessoreinheit 40.1 ist insbesondere dazu eingerichtet, über die Schnittstelle von der zumindest einen Sensoreinheit S1, S2, S3 empfangene Ist-Auswertedaten IAD mit Soll-Auswertedaten SAD zu vergleichen und abhängig davon vorausschauende Vorhersagen, über Wartungs- und/oder andere Unterstützung erfordernde Zustände abzuleiten und/oder einen Fehlerzustand zu protokollieren. Insbesondere kann bei einem Über- oder Unterschreiten der Ist-Auswertedaten IAD mit vorgegebenen SOLL-Auswertedaten SAD eine Störmeldung als Fehlermeldung in der Speichereinheit 40.2 abgespeichert werden.

Insbesondere kann das Sensormodul 9 über den ersten Anschluss AS1 mit einem IO-Link-Master sowie einem Bussystem BUS mit einer übergeordneten Steuereinheit SPS, beispielsweise einer SPS-Steuereinheit, und/oder Servo Controller SC verbunden sein.

Hierbei kann vorgesehen sein, dass die auf der Speichereinheit 40.2 gespeicherten Auswertedaten AD zyklisch oder in Echtzeit an die übergeordnete Steuereinheit übertragen werden.

### Bezugszeichenliste

- 1: Drehtischsystem
- 2: Bearbeitungs- und Handlingseinheit
- 3: Trommelkurve
- 3.1: Gewindegang
- 4: Mitnehmer
- 5: Gehäuse
- 6: Drehkörper
- 7: Antrieb
- 7.1: Stator
- 7.2: Rotor
- 8: Getriebe
- 9: Sensormodul
- 9.1: Modulkörper
- 9.2: Öffnung

- 10: Lagersitz
- 11: Lager
- 12: Lagerring
- 13: Befestigungsabschnitt
- 14: Aufnahme
- 16: Adaptereinrichtung
- 17: Gehäusering
- 18: Lager
- 19: Wellenmutter
- 20: Permanentmagnet
- 21: Spule
- 22: Nocke
- 23: Magnet
- 40.1: Prozesseinheit
- 40.2: Speichereinheit

- AS1, AS2: Anschluss
- AR: Auswerteroutine
- AD: Auswertedaten
- BUS: Bussystem
- IAD: IST-Auswertedaten
- SAD: SOLL-Auswertedaten
- BP1...BP3: Betriebsparameter
- TA: Trommelachse
- DA: Drehachse Drehkörper
- L: Länge Rotor
- D: Durchmesser Drehkörper
- MC: Microcontroller
- S1...S3: Sensoreinheit
- SC: Servo Controller
- PL: Platine

## Patentansprüche

1. Drehtischsystem zur Aufnahme von wenigstens einer Bearbeitungs- und/oder Handlingseinheit, umfassend einen um eine Drehachse (DA) drehbar angeordneten Drehkörper (6) zur Aufnahme der zumindest einen Bearbeitungs- und/oder Handlingseinheit (2), wobei der Drehkörper (6) zur Einleitung einer Drehbewegung über mehrere Mitnehmer (4) mit einer wendelförmigen Trommelkurve (3) in Eingriff bringbar ist, die in einem Gehäuse (5) aufgenommen und um eine Trommelachse (TA) motorisch drehbar antreibbar ausgebildet ist, wobei an oder innerhalb des Gehäuses (5) ein Sensormodul (9) mit mehreren Sensoreinheiten (S1, S2, S3) zur Erfassung zumindest eines Zustands- und/oder Betriebsparameters (BP1, BP2, BP3) wenigstens der Trommelachse (TA) vorgesehen sind, **dadurch gekennzeichnet, dass** das Sensormodul (9) wenigstens eine erste Sensoreinheit (S1) zur Erfassung eines ersten Betriebsparameters (BP1), insbesondere eines ersten IST-Betriebsparameter (BPI1), und eine zweite Sensoreinheit (S2) zur Erfassung eines zweiten Betriebsparameters (BP2), insbesondere eines zweiten IST-Betriebsparameter (BPI2), und eine dritte Sensoreinheit (S3) zur Erfassung eines dritten Betriebsparameters (BP3), insbesondere eines dritten IST-Betriebsparameter (BPI3), aufweist, dass die erste Sensoreinheit (S1) als Temperatursensoreinheit zur Erfassung des ersten IST-Betriebsparameters (BPI1) in Form der Trommelachsentemperatur ausgebildet ist, dass die zweite Sensoreinheit (S2) als Winkelsensoreinheit zur Erfassung des zweiten IST-Betriebsparameters (BPI2) in Form der Drehzahl und/oder Anzahl an Drehungen der Trommelkurve (3) und/oder der Trommelachse (TA) ausgebildet ist, dass die dritte Sensoreinheit (S3) als Vibrationssensoreinheit zur Erfassung des dritten IST-Betriebsparameters (BPI3) in Form der Vibrationsstärke und/oder Schwingungen des Drehtischsystems (1) ausgebildet ist, und dass die mittels der mehreren Sensoreinheiten (S1, S2, S3) erfassten IST-Betriebsparameter (BPI1, BPI2, BPI3) unter Einbeziehung einer in der Steuereinheit (MC) ausgeführten Auswerteroutine (AR) ausgewertet werden und in Abhängigkeit der Auswertung Vorhersagen, insbesondere vorausschauende Vorhersagen, über Wartungs- und/oder andere Unterstützung erfordernde Zustände aus den erfassten IST-Betriebsparameter (BPI1, BPI2, BPI3) abgeleitet werden.

2. Drehtischsystem nach Anspruch 1, **dadurch gekennzeichnet, dass** das Sensormodul (9) einen gehäuseförmigen Modulkörper (9.1) zur Aufnahme der mehreren Sensoreinheiten (S1, S2, S3) aufweist.

3. Drehtischsystem nach Anspruch 2, **dadurch gekennzeichnet, dass** das Sensormodul (9) mit seinem Modulkörper (9.1) fest jedoch lösbar an oder in dem Gehäuse (5) des Drehtischsystems (1) angeordnet ist.

4. Drehtischsystem nach einem der vorhergehenden Ansprüche, **dadurch gekennzeichnet, dass** das Sensormodul (9) in einer derartigen räumlichen Nähe zur Trommelachse (TA) an oder in des Gehäuses (5) angeordnet ist, dass wenigstens eine der mehreren Sensoreinheiten (S1, S2, S3) mit der Trommelachse (TA) zusammenwirken kann.

5. Drehtischsystem nach einem der vorhergehenden Ansprüche 2 bis 4, **dadurch gekennzeichnet, dass** das Sensormodul (9) derart außen an dem Gehäuse (5) angeordnet ist, dass ein in dem Modulkörper (9.1) ausgebildete Öffnung (9.2) die Trommelachse (TA) zumindest teilweise aufnimmt, so dass die zumindest eine der mehreren Sensoreinheiten (S1, S2, S3) im Bereich der Trommelachse (TA) vorgesehen ist.

6. Drehtischsystem nach einem der vorhergehenden Ansprüche, **dadurch gekennzeichnet, dass** die erste Sensoreinheit (S1) als IR-Sensoreinheit oder Temperatur-Widerstandssensoreinheit ausgebildet ist.

7. Drehtischsystem nach einem der vorhergehenden Ansprüche, **dadurch gekennzeichnet, dass** die zweite Sensoreinheit (S2) als Inkremetalsensoreinheit oder optische Sensoreinheit oder Hallsensoreinheit ausgebildet ist.

8. Drehtischsystem nach einem der vorhergehenden Ansprüche, **dadurch gekennzeichnet, dass** das Sensormodul (9) mit dritter Sensoreinheit (S3) unmittelbar an dem Gehäuse (5) angeordnet ist, so dass sich von dem Drehtischsystem (1) ausgehende Schwingungen auf das Sensormodul (9) übertragen.

9. Drehtischsystem nach einem der vorhergehenden Ansprüche, **dadurch gekennzeichnet, dass** das Sensormodul (9) eine Platine (PL) aufweist, die fest mit dem Modulkörper (9.1) verbunden, insbesondere verklebt ist, wobei auf der Platine (PL) die mehreren Sensoreinheiten (S1, S2, S3), eine Steuereinheit (MC) sowie ein erster und/oder zweiter Anschluss (AS1, AS2) vorgesehen sind.

10. Drehtischsystem nach Anspruch 9, **dadurch gekennzeichnet, dass** die Platine (PL) im Randbereich der Öffnung (9.2) fest mit Modulkörper (9.1) verbunden, insbesondere verklebt, ist.

11. 12. Drehtischsystem nach einem der vorhergehenden Ansprüche, **dadurch gekennzeichnet, dass** die Steuereinheit (MC) wenigstens eine Prozessoreinheit (40.1) zur Ausführung der Auswerteroutine (AR) und eine mit der Prozessoreinheit (40.1) zusammenwirkende Speichereinheit (40.2) zum zumindest zeitweisen Speichern oder Zwischenspeichern von Auswertedaten (AD) aufweist, die über eine Schnittstelle von der Steuereinheit (40) an die mehreren Sensoreinheiten (S1, S2, S3) übertragen und/oder empfangen werden.

12. Drehtischsystem nach einem der vorhergehenden Ansprüche, **dadurch gekennzeichnet, dass** die Auswertedaten (AD) aktuell mittels der mehreren Sensoreinheiten (S1, S2, S3) erfasste IST-Betriebsparameter (BPI1, BPI2, BPI3) als IST-Auswertedaten (IAD) sowie entsprechende Soll-Auswertedaten (SAD) als SOLL-Betriebsparameter (BPS1, BPS2, BPS3) umfassen und/oder dass die Prozessoreinheit (40.1) dazu eingerichtet ist, über die Schnittstelle von den mehreren Sensoreinheiten (S1, S2, S3) empfangene Ist-Auswertedaten (IAD) mit Soll-Auswertedaten (SAD) zu vergleichen und abhängig davon vorausschauende Vorhersagen über Wartungs- und/oder andere Unterstützung erfordernde Zustände abzuleiten und/oder einen Fehlerzustand zu protokollieren.

13. Drehtischsystem nach einem der vorhergehenden Ansprüche, **dadurch gekennzeichnet, dass** bei einem Über- oder Unterschreiten der Ist-Auswertedaten (IAD) mit vorgegebenen SOLL-Auswertedaten (SAD) eine Störmeldung als Fehlermeldung in der Speichereinheit (40.2) abgespeichert wird.

14. Drehtischsystem nach Anspruch 9, **dadurch gekennzeichnet, dass** das Sensormodul (9) über den ersten Anschluss (AS1) mit einem IO-Link-Master sowie einem Bussystem (BUS) mit einer übergeordneten Steuereinheit (SPS) und/oder einem Servo Controller (SC) verbunden wird und/oder dass die auf der Speichereinheit (40.2) gespeicherten Auswertedaten (AD) zyklisch oder in Echtzeit an die übergeordnete Steuereinheit übertragen werden.

## Claims

1. A turntable system for accommodating at least one machining and/or handling unit, comprising a rotary body (6) arranged to be rotatable about an axis of rotation (DA) for receiving the at least one machining and/or handling unit (2), wherein the rotary body (6) can be brought into engagement via multiple dogs (4) with a helical drum cam (3) for initiating a rotary movement, which drum cam is accommodated in a housing (5) and is designed to be rotatably driven by motor about a drum axis (TA), wherein on or within the housing (5), a sensor module (9) with multiple sensor units (S1, S2, S3) for detecting at least one status and/or operating parameter (BP1, BP2, BP3) of at least the drum axis (TA) is provided, **characterized in that** the sensor module (9) comprises at least one first sensor unit (S1) for detecting a first operating parameter (BP1), in particular a first ACTUAL operating parameter (BPI1), and a second sensor unit (S2) for detecting a second operating parameter (BP2), in particular a second ACTUAL operating parameter (BPI2), and a third sensor unit (S3) for detecting a third operating parameter (BP3), in particular a third ACTUAL operating parameter (BPI3), **in that** the first sensor unit (S1) is designed as a temperature sensor unit for detecting the first ACTUAL operating parameter (BPI1) in the form of the drum axis temperature, **in that** the second sensor unit (S2) is designed as an angle sensor unit for detecting the second ACTUAL operating parameter (BPI2) in the form of the rotational speed and/or number of rotations of the drum cam (3) and/or the drum axis (TA), **in that** the third sensor unit (S3) is designed as a vibration sensor unit for detecting the third ACTUAL operating parameter (BPI3) in the form of the vibration strength and/or vibrations of the turntable system (1), and **in that** the ACTUAL operating parameters (BPI1, BPI2, BPI3) detected by means of the multiple sensor units (S1, S2, S3) are evaluated with the inclusion of an evaluation routine (AR) executed in the control unit (MC) and, depending on the evaluation, predictions, in particular forward-looking predictions, about maintenance and/or other support requiring states are derived from the detected ACTUAL operating parameters (BPI1, BPI2, BPI3).

2. Turntable system according to claim 1, **characterized in that** the sensor module (9) comprises a housing-shaped module body (9.1) for accommodating the multiple sensor units (S1, S2, S3).

3. Turntable system according to claim 2, **characterized in that** the sensor module (9) is arranged with its module body (9.1) fixedly but detachably on or in the housing (5) of the turntable system (1).

4. Turntable system according to any one of the preceding claims, **characterized in that** the sensor module (9) is arranged on or in the housing (5) in such a spatial proximity to the drum axis (TA) that at least one of the multiple sensor units (S1, S2, S3) can interact with the drum axis (TA).

5. Turntable system according to any one of the preceding claims 2 to 4, **characterized in that** the sensor module (9) is arranged outside on the housing (5) in such a manner that an opening (9.2) formed in the module body (9.1) at least partially accommodates the drum axis (TA), so that the at least one of the multiple sensor units (S1, S2, S3) is provided in the region of the drum axis (TA).

6. Turntable system according to any one of the preceding claims, **characterized in that** the first sensor unit (S1) is designed as an IR sensor unit or temperature resistance sensor unit.

7. Turntable system according to any one of the preceding claims, **characterized in that** the second sensor unit (S2) is designed as an incremental sensor unit or optical sensor unit or Hall sensor unit.

8. Turntable system according to any one of the preceding claims, **characterized in that** the sensor module (9) with third sensor unit (S3) is arranged directly on the housing (5) such that vibrations emanating from the turntable system (1) are transmitted to the sensor module (9).

9. Turntable system according to any one of the preceding claims, **characterized in that** the sensor module (9) comprises a circuit board (PL) which is firmly connected, in particular adhesively bonded, to the module body (9.1), wherein the multiple sensor units (S1, S2, S3), a control unit (MC) and a first and/or second connection (AS1, AS2) are provided on the circuit board (PL).

10. Turntable system according to claim 9, **characterized in that** the circuit board (PL) is firmly connected, in particular adhesively bonded, to the module body (9.1) in the edge region of the opening (9.2).

11. Turntable system according to any one of the preceding claims, **characterized in that** the control unit (MC) comprises at least one processor unit (40.1) for executing the evaluation routine (AR) and a storage unit (40.2) cooperating with the processor unit (40.1) for at least temporarily storing or buffering evaluation data (AD) which are transmitted and/or received via an interface from the control unit (40) to the plurality of sensor units (S1, S2, S3) .

12. Turn table system according to any one of the preceding claims, **characterized in that** the evaluation data (AD) comprise ACTUAL operating parameters (BPI1, BPI2, BPI3) currently detected by means of the multiple sensor units (S1, S2, S3) as ACTUAL evaluation data (IAD) and corresponding target evaluation data (SAD) as TARGET operating parameters (BPS1, BPS2, BPS3) and/or **in that** the processor unit (40.1) is configured to compare actual evaluation data (IAD) received via the interface from the multiple sensor units (S1, S2, S3) with target evaluation data (SAD) and, depending therefrom, to derive forward-looking predictions about maintenance and/or other support requiring states and/or to log a fault state.

13. Turn table system according to any one of the preceding claims, **characterized in that** an error message is stored as a fault message in the storage unit (40.2) if the actual evaluation data (IAD) exceeds or falls below predetermined TARGET evaluation data (SAD).

14. Turn table system according to claim 9, **characterized in that** the sensor module (9) is connected via the first connection (AS1) to an IO-Link master and a bus system (BUS) to a higher-level control unit (SPS) and/or a servo controller (SC), and/or **in that** the evaluation data (AD) stored on the storage unit (40.2) are transmitted cyclically or in real time to the higher-level control unit.

## Revendications

1. Système de table tournante, destiné à recevoir au moins une unité d'usinage et / ou de manutention, comprenant un corps rotatif (6) placé de manière rotative autour d'un axe de rotation (DA), pour recevoir l'au moins une unité d'usinage et / ou de manutention (2), dans lequel pour initier un déplacement en rotation, le corps rotatif (6) est susceptible d'être amené en engagement par l'intermédiaire de plusieurs entraîneurs (4) avec un tambour à rainure (3) hélicoïdal, qui est réceptionné dans un carter (5) et qui est conçu en étant susceptible d'être entraîné en rotation par moteur autour d'un axe de tambour (TA), dans lequel sur ou à l'intérieur du carter (5) un module de capteurs (9) pourvu de plusieurs unités de capteur (S1, S2, S3) est prévu pour la détection d'au moins un paramètre d'état et / ou paramètre de fonctionnement (BP1, BP2, BP3) d'au moins l'axe de tambour (TA), **caractérisé en ce que** le module de capteurs (9) comporte au moins une première unité de capteur (S1), destinée à détecter un premier paramètre de fonctionnement (BP1), notamment un premier paramètre de fonctionnement (BPI1) RÉEL, et une deuxième unité de capteur (S2), destinée à détecter un deuxième paramètre de fonctionnement (BP2), notamment un deuxième paramètre de fonctionnement (BPI2) RÉEL, et une troisième unité de capteur (S3), destinée à détecter un troisième paramètre de fonctionnement (BP3), notamment un troisième paramètre de fonctionnement (BPI3) RÉEL, **en ce que** la première unité de capteur (S1) est conçue en tant qu'une unité de capteur de température, destinée à détecter le premier paramètre de fonctionnement (BPI1) RÉEL, sous la forme de la température de l'axe de tambour, **en ce que** la deuxième unité de capteur (S2) est conçue en tant qu'une unité de capteur angulaire, destinée à détecter le deuxième paramètre de fonctionnement (BPI2) RÉEL, sous la forme du régime et / ou du nombre de rotations du tambour à rainure (3) et / ou de l'axe de tambour (TA), **en ce que** le troisième unité de capteur (S3) est conçue en tant qu'une unité de capteur de vibrations, destinée à détecter le troisième paramètre de fonctionnement (BPI3) RÉEL, sous la forme de l'intensité des vibrations et / ou des oscillations du système de table tournante (1) et **en ce que** les paramètres de fonctionnement (BPI1 BPI2, BPI3) RÉELS détectés au moyen des plusieurs unités de capteur (S1, S2, S3) sont évalués sous implication d'une routine d'évaluation (AR) réalisée dans l'unité de commande (MC) et en fonction de l'évaluation, des prévisions, notamment des prévisions prévoyantes sont déduites des paramètres de fonctionnement (BPI1, BPI2, BPI3) RÉELS au sujet d'états exigeant une maintenance et / ou une autre assistance.

2. Système de table tournante selon la revendication 1, **caractérisé en ce que** le module de capteurs (9) comporte un corps de module (9.1) en forme de carter, destiné à recevoir les plusieurs unités de capteur (S1, S2, S3).

3. Système de table tournante selon la revendication 2, **caractérisé en ce que** par son corps de module (9.1), le module de capteurs (9) est placé de manière fixe mais toutefois amovible sur ou dans le carter (5) du système de table tournante (1).

4. Système de table tournante selon l'une quelconque des revendications précédentes, **caractérisé en ce que** le module de capteurs (9) est placé sur ou dans le carter (5) à une proximité telle de l'axe de tambour (TA), qu'au moins l'une des plusieurs unités de capteur (S1, S2, S3) puisse interagir avec l'axe de tambour (TA).

5. Système de table tournante selon l'une quelconque des revendications précédentes 2 à 4, **caractérisé en ce que** le module de capteurs (9) est placé à l'extérieur sur le carter (5) de telle sorte qu'un orifice (9.2) conçu dans le corps de module (9.1) réceptionne au moins partiellement l'axe de tambour (TA) de manière à ce que l'au moins une des plusieurs unités de capteur (S1, S2, S3) soit prévue dans la zone de l'axe de tambour (TA).

6. Système de table tournante selon l'une quelconque des revendications précédentes, **caractérisé en ce que** la première unité de capteur (S1) est conçue sous la forme d'une unité de capteur IR ou de capteur de température à résistance.

7. Système de table tournante selon l'une quelconque des revendications précédentes, **caractérisé en ce que** la deuxième unité de capteur (S2) est conçue sous la forme d'une unité de capteur incrémental ou d'une unité de capteur optique ou d'une unité de capteur à effet Hall.

8. Système de table tournante selon l'une quelconque des revendications précédentes, **caractérisé en ce que** le module de capteurs (9) avec la troisième unité de capteur (S3) est placée directement sur le carter (5), de telle sorte que des oscillations partant du système de table tournante (1) se transmettent sur le module de capteurs (9).

9. Système de table tournante selon l'une quelconque des revendications précédentes, **caractérisé en ce que** le module de capteurs (9) comporte une carte de circuit imprimé (PL) qui est fixement assemblée, notamment collée avec le corps de module (9.1), sur la carte de circuit imprimé (PL) étant prévus les plusieurs unités de capteur (S1, S2, S3), une unité de commande (MC) ainsi qu'un premier et / ou un deuxième raccordement (AS1, AS2).

10. Système de table tournante selon la revendication 9, **caractérisé en ce que** dans la zone marginale de l'orifice (9.2), la carte de circuit imprimé (PL) est fixement assemblée, notamment collée avec le corps de module (9.1).

11. Système de table tournante selon l'une quelconque des revendications précédentes, **caractérisé en ce que** l'unité de commande (MC) comporte au moins une unité de processeur (40.1), destinée à réaliser la routine d'évaluation (AR) et une unité de mémoire (40.2) interagissant avec l'unité de processeur (40.1), pour la mémorisation ou la mémorisation intermédiaire au moins temporaire de données d'évaluation (AD), qui par l'intermédiaire d'une interface sont transmises par l'unité de commande (40) aux plusieurs unités de capteur (S1, S2, S3) et / ou réceptionnées.

12. Système de table tournante selon l'une quelconque des revendications précédentes, **caractérisé en ce que** les données d'évaluation (AD) actuelles comprennent des paramètres de fonctionnement (BPI1, BPI2, BPI3) RÉELS détectés actuellement au moyen des plusieurs unités de capteur (S1, S2, S3) en tant que données d'évaluation (IAD) RÉELLES, ainsi que des données d'évaluation (SAD) THÉORIQUES en tant que paramètres de fonctionnement (BPS1, BPS2, BPS3) THÉORIQUES et / ou **en ce que** l'unité de processeur (40.1) est configurée pour comparer des données d'évaluation (IAD) RÉELLES réceptionnées par l'intermédiaire de l'interface par les plusieurs unités de capteur (S1, S2, S3) avec des données d'évaluation (SAD) THÉORIQUES et en fonction de ce qui précède, pour en déduire des prévisions prévoyantes au sujet d'états exigeant une maintenance et / ou une autre assistance et / ou pour enregistrer un état de défaut.

13. Système de table tournante selon l'une quelconque des revendications précédentes, **caractérisé en ce que** lorsque les données d'évaluation (IAD) RÉELLES sont dépassées ou ne sont pas atteintes par rapport à des données d'évaluation (SAD) THÉORIQUES, un message de panne est sauvegardé en tant que message de défaut dans l'unité de mémoire (40.2).

14. Système de table tournante selon la revendication 9, **caractérisé en ce que** l'on connecte le module de capteurs (9) par l'intermédiaire du premier raccordement (AS1) avec un maître IO-Link, ainsi qu'avec un système de bus (BUS) avec une unité de commande supérieure (SPS) et / ou un contrôleur de direction (SC) et / ou **en ce que** les données d'évaluation (AD) sauvegardées dans l'unité de mémoire (40.2) sont transmises cycliquement ou en temps réel à l'unité de commande supérieure.
